# EUROPEAN PATENT APPLICATION

(11) **EP 2 533 547 A1**
(43) Date of publication of application: **12.12.2012**
(21) Application number: 11183911.4
(22) Date of filing: 05.10.2011
(51) Int. Cl.: H04N 21/462, H04N 21/43, H04N 21/8547, H04N 21/436, H04N 21/442

(54) **Method and system for providing a synchronised user experience from multiple modules**

(30) Priority: 10.06.2011 EP 11169513
(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Klos, Victor, 2498 BV The Hague (NL); Prins, Martin, 2561 EN The Hague (NL); Stokking, Hans Maarten, 2292 CH Wateringen (NL); Havekes, Anton, 3122 VN Schiedam (NL); Doets, Peter-Jan, 2628 TG Delft (NL); Steenbergen, van, Ate, 9737 NN Groningen (NL)

(57) **Abstract**

A method and system at the site of a user are disclosed that provide for a shared understanding between a first and second content providing module on an applicable timing model by an explicit exchange of information on the content providing steps and of associated time values for one or more of these steps, adding unambiguous meaning to each of the content providing steps prior to presenting the first and second content to the user. The time delay information for specific content providing steps as received from the first content providing module can be used by other modules to determine when to provide content to the user. The timing model for the first content providing module is enriched with information enabling that timing information of the first content providing module can now be applied unambiguously by the second content providing module having a different timing mode.

## Description

### TECHNICAL FIELD

The invention relates to a method and system for providing a synchronised user experience for a user of multiple content providing modules.

### BACKGROUND

Content synchronisation is a widely studied and standardized topic. A well-known example is provided by the MPEG2 systems standard (ISO/IEC 13818-1 or ITU-T Rec. H.222.0) for synchronising video and audio data from transport streams in e.g. a television receiver. MPEG-2 is adopted by the DVB standardization body, which provides widely used standards for the digital delivery of audiovisual media.

MPEG applies transport streams TS for delivering the encoded video and audio elementary streams containing sequences of video and audio units to a receiver. Along with the transport stream, a program clock reference PCR is transmitted from which the receiver can reconstruct an encoder system clock. The video and audio units contain presentation timestamps PTS. Related video and audio units contain the same PTS and may thus be rendered synchronously in accordance with the PCR system clock.

Not only the synchronisation of video and audio relies on presentation timestamps. DVB Event mechanisms have been defined that allow a broadcaster to send events to an application residing in a receiver. This enables the application to display specific information at a certain moment in time in the DVB broadcast. As an example, during a show, questions may be visually displayed on the television screen at the same time the TV host reads the questions. One mechanism that can be used is the DVB Synchronised event as defined in ETSI TS 102 809 v1.1.1. It provides tight synchronisation of StreamEvents with certain presentation time stamps of audio and/or video streams. The receiver must deliver the event to applications timed so as to maintain synchronisation with the video and audio. DVB Event mechanisms also encompass DVB-CC "do it now" stream events, which according to the ETSI specification ETSI TS 102 809 cannot be accurately synchronised with linear media streams. Synchronisation of "do it now" events to audio/video streams is possible by applying the same PTS value to a stream event unit as the corresponding video frame. This behaviour is however implementation dependent as will be further explained now.

The timing model underlying MPEG-2 assumes that decoding and presentation of received elementary streams are instantaneous, i.e. there is no time delay between decoding and presentation of a media unit. Receiver manufacturers have realized that this assumption is not true in practice and constructed the receivers to control additional delays not implemented in the MPEG-2 timing model, e.g. by using buffers enabling additional temporal delays.

Thus, in MPEG-2, the interpretation of a PTS value and the presentation of the media unit related to the PTS value is implementation dependent. For some receiver implementations, the time delay between content providing steps (such as decoding and display of a video frame) is different from other implementations, although the same PTS values are used. This means that when multiple devices are involved in the presentation of synchronised media, MPEG-2 lacks the means to synchronise the devices such that a synchronised user experience can be provided for the user. This also becomes apparent from the mentioned DVB Synchronized Events: DVB states that the receiver must deliver the event to applications timed so as to maintain synchronisation with the video and audio, but not how this can be achieved.

It is expected that the popularity of using multiple content providing modules from which a synchronised user experience is provided will grow significantly in the near future. One example includes a case wherein first content (e.g. a television signal containing video/audio units) is received at a television receiver, such as a set-top box (STB) and second content (e.g. a still picture received over the internet) is received at a tablet computer to provide an enhanced user experience.

However, as mentioned above, the use of different content providing modules, provides synchronisation difficulties because of the implementation dependencies. Also, when the content is received from different domains (i.e. environments wherein time has a different meaning, value or granularity), such as in the case of the television receiver and the tablet, different timing models give rise to synchronisation issues.

Therefore, there is a need in the art to improve synchronisation of at least first and second content provided, respectively, from first and second content providing modules to a user.

### SUMMARY

A method is disclosed for providing a synchronised user experience comprising at least first content and second content. The first content is provided from a first content providing module at the site of the user and the second content is provided from a second content providing module at the site of the user. The first content providing module receives or generates the first content and performs one or more first content providing steps to provide the first content to the user. The second content module receives or generates the second content and performs one or more second content providing steps to provide the second content to the user.

The first content providing module provides information indicative of one or more of the first content providing steps to a synchronisation module. The synchronisation module may be the second content providing module or be implemented in a device also containing the second content providing module. The first content providing module also provides information indicative of one or more time values associated with performing one or more of the first content providing steps from the first content providing module to the synchronisation module.

The synchronisation module establishes one or more time values for performing one or more of the second content providing steps in the second content providing module in dependence on the received information indicative of the first content providing steps and the information indicative of the one or more time values associated with the first content providing steps. The synchronisation module may transmit the established information to the second content providing module.

The second content providing module performs one or more of the second content providing steps in accordance with the one or more established time values from the synchronisation module such that the second content is provided to the user from the second content providing module in synchronisation with the first content provided to the user from the first content providing module.

Furthermore, a system is disclosed that is configured for providing a synchronised user experience comprising at least first content and second content. The system comprises at least a first content providing module, a second content providing module and a synchronisation module. The synchronisation module may be the same module as the second content providing module or may be implemented in the same device as the second content providing module.

The system comprises a first content providing module at the site of the user configured for receiving or generating the first content and for performing one or more first content providing steps to provide the first content to the user. The system also comprises a second content providing module at the site of the user configured for receiving or generating the second content and for performing one or more second content providing steps to provide the second content to the user.

The first content providing module is further configured to provide information indicative of one or more of the first content providing steps and to provide information indicative of one or more time values associated with performing one or more of the first content providing steps to a synchronising module.

The synchronising module is further configured to establish one or more time values for performing one or more of the second content providing steps in dependence on the received information indicative of the first content providing steps and the information indicative of one or more time values associated with the first content providing steps from the first content providing device.

The second content providing module is configured to perform the second content providing steps in accordance with one or more of the established time values such that the second content is provided to the user from the second content providing module in synchronisation with the first content provided to the user from the first content providing module. Of course, synchronisation is related to the perception of the user.

Furthermore, a first content providing module, a second content providing module and a synchronisation module for use in the above system are disclosed. It should be appreciated that the modules can be configured as software code running on a general purpose or application specific processor or as dedicated hardware. A synchronisation signal for use in the system and method is also disclosed.

It should be appreciated that information indicative of time values may relate to time delays resulting from one or more particular content providing steps (e.g. processing time, rendering time etc.) by the first content providing module but may also relate to agreed identifiers representing such time delays. Use of such identifiers may e.g. reduce network load.

The disclosed method and system at the site of the user provide for a shared understanding between the first and second content providing module on the applicable timing model by an explicit exchange of information on the content providing steps and of associated time values for one or more of these steps, thus adding unambiguous meaning to each of the content providing steps prior to presenting the first and second content to the user. The time delay information for specific content providing steps as received from the first content providing module can be used by other modules to determine when to provide content to the user. The timing model for the first content providing module (e.g. a DVB timing model) is enriched with information enabling that timing information of the first content providing module can now be applied unambiguously by the second content providing module having a different timing model (e.g. an internet timing model). The second content providing steps may be triggered by a DVB event mechanism using stream event types as defined in ETSI TS 102 809.

Content providing may relate to the preparation of the content for the viewer as intended by the content producer.

In one embodiment of the invention, both content providing modules may contain a synchronisation module and bidirectional information exchange may be used to synchronize the content providing to the user.

In particular, in an embodiment of the invention, the first and second content providing steps include at least a content processing step for processing the received first and second content and a content rendering step for rendering the processed first and second content. Processing may be understood to relate to manipulation of the decoded signal (e.g. calculation of audio effects). Rendering may be understood as the transformation of the processed decoded signal by an actuator of some sort configured to stimulate one or more senses of the user. By exchanging information on at least these two content providing steps, synchronisation of the first and second content is not only achieved at some (possibly unknown) stage within the various content providing modules but indeed for the senses of the user. Synchronisation with respect to the user experience is further improved by also accounting for content propagation of the content to the user, i.e. the travelling of the rendered content fit for reception by the sensors of humans from the actuator to the human (e.g. the rumbles of an earthquake machine) in case content propagation time delays matter.

In an embodiment of the invention, the identity of the first content providing module providing the time values associated with the first content providing steps is communicated to the synchronisation module. The identity of the first content providing module may be used by a second content providing module to implicitly determine the type of the first content providing module and therefore the original timing model with corresponding assumptions or interpretations made in this timing model. The interpretation may refer to a particular indication used to determine a time and an interpretation to which content providing step the time relates.

In still another embodiment of the invention, further information is provided from the first content providing module. The further information may relate to the reliability of one or more of the time values associated with the one or more first content providing steps and/or an indication whether the time required for a first content providing step has indeed been taken into account in the time value provided to the synchronisation module. The reliability may determine whether or not the time for a content providing step is taken into account (e.g. an assumed time may not been taken into account (low reliability), whereas a measured time may be taken into account (higher reliability)). This information provides for establishing the level of the technical trust of the information on the time values. The synchronisation module may decide not to use a particular time value when it determines the reliability is low or the synchronisation module can do a better estimation or measurement itself. Another use is to create an alternate experience that matches the lesser accuracy of the first content providing module.

In yet another embodiment of the invention, the step of providing information indicative of one or more of the first content providing steps and/or the step of providing information indicative of one or more time values associated with performing one or more of the first content providing steps is provided from the first content providing module to the synchronisation module prior to receiving or generating the first content at the first content providing module at the site of the user. This allows for pre-sharing information between the modules, e.g. during setup of the devices or booting the devices containing the module(s), since many time delay values remain substantially constant over time. For example, the rendering time of an STB or the processing time of a certain effect on a home surround sound set is almost constant over time. The pre-sharing of the information can e.g. be performed by broadcasting the information or by making the information available for interested modules on an synchronisation information interface or by supplying some identifier with a known meaning (e.g. determined by some standardisation body) like a URN, URI or name space.

A still further embodiment of the invention involves the first content providing module further providing location information to the synchronisation module, the location information includes location reference information and location values in accordance with the location reference information for indicating the location for providing the second content. This embodiment provides for a shared understanding of a location reference system (e.g. a coordinate system) between different content providing modules to enable appropriate creation of spatial effects. Location may refer to location of the devices containing the content providing modules, the location of the effect or the location of the user. In case of location of the effect, the location information may be observed as a special case of the content propagation information for content propagating to the user mentioned above.

A further embodiment of the invention comprises reporting or negotiating one or more options for providing the second content to the user from the second content providing device to the first content providing device, each of the options being associated with one or more different time values for one or more second content providing steps for providing the second content. The first content providing module may select an option on the basis of the reported different time values and the available time for presenting the first content from the first content providing module. The first content providing device instructs the second content providing device which option to use to provide the second content to the user. The embodiment enables providing the second content to the user in different fashions (e.g. different qualities) in dependence on the time available for preparing the second content in this fashion.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIGS. 1A-1D are schematic illustrations of system embodiments according to the invention;
FIGS. 2A and 2B are a schematic illustration of a first and second content providing module according to an embodiment of the invention and a flow chart illustrating an embodiment of a method according to the invention;
FIG. 3 is a schematic illustration of a system containing three devices performing several content providing steps;
FIGS. 4-6 are schematic illustrations of an application of an embodiment of the invention using the DVB Event mechanism; and
FIG. 7 is a schematic illustration of another application of an embodiment of the invention using location information.

### DETAILED DESCRIPTION OF THE DRAWINGS

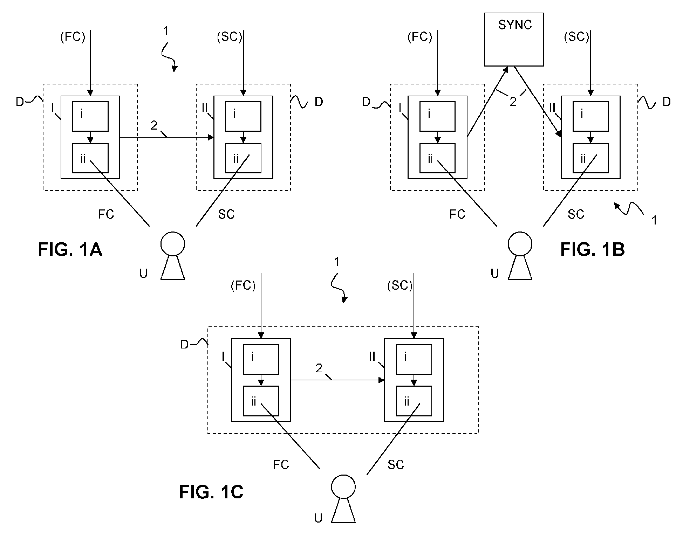

FIGS. 1A-1C are schematic illustrations of systems 1 according to embodiments of the invention. Each of the systems comprises one or more devices D, a first content providing module I and a second content providing module II installed at a site of a user U. The systems 1 are adapted to provide a synchronised user experience containing first content FC and second content SC. The first content FC and the second content SC may either be received over a delivery network or be generated in a device D at the site of the user U. The first content FC and/or the second content SC may also be stored locally at the site of the user (e.g. in a personal video recorder or hard disc). The first content FC and the second content SC are not necessarily different.

The delivered or generated first content FC is provided from the first content providing module I at the site of the user U and the second content SC is provided from the second content providing module II at the site of the user U to the user U. The first content providing module I receives or generates the first content (FC) and performs one or more first content providing steps i, ii to provide the first content FC to the user U. The second content module II receives or generates the second content (SC) and performs one or more second content providing steps i, ii to provide the second content SC to the user U. It should be noted that the first content FC and the second content SC may be received by the same device D, the device D forwarding the second content SC to a second content providing module possibly located in a further device D.

In more detail, the first content providing module I receives first content, e.g. over a media distribution network. The second content may be received over the same network or over a different network. The indication of the received first and second content between parentheses indicates that the first and second content may be received as packets or other units using one or more protocols. E.g. the first content FC from a digital television network may be arranged as transport packets transferred according to DVB protocols, whereas the second content may be received over the internet using TCP/IP. In such an example, the device D containing the first content providing module I may be a television or set-top box and the device D containing the second content providing module II may be a personal computer, such as a laptop computer or a tablet computer. Device D containing the second content providing module II may also be a smart phone.

It should be appreciated that the first and second content providing modules I, II are not necessarily contained in multiple devices. As illustrated in FIG. 1C, a single device D (e.g. a personal computer) may have both the first and second content providing modules I, II on board. The first content (FC) and second content (SC) may then be received over the same network (e.g. the internet). An example may be a personal computer having a media player playing a streaming video as first content FC and an internet browser displaying second content SC.

The received content (FC), (SC), is received and decoded by the devices D and at some point in the chain content providing steps i, ii are performed to provide the content as first content FC and second content SC to the user U. The first and second content providing steps i and ii may relate to a content processing step for processing the received first and second content and a content rendering step for rendering the processed first and second content. Processing may be understood to relate to manipulation of the decoded signal (e.g. calculation of audio effects). Rendering may be understood as the transformation of the processed decoded signal by an actuator of some sort configured to stimulate one or senses of the user U.

In order to enable the system 1 to provide synchronised content to the user U, the first content FC and second content SC must be synchronised from the perspective of the user U. In order to do so, the first content providing module I informs the second content providing module II of the applicable timing model and time values related to the timing model in an information step indicated by the arrow 2. In FIGS. 1A and 1C, the first content providing module I informs the second content providing module II directly, whereas in FIG. 1B, a synchronisation module SYNC is applied to perform one or more steps of the disclosed synchronisation method. The synchronisation module SYNC may be the same module as the second content providing module II or may be implemented in the same device D as the second content providing module II.

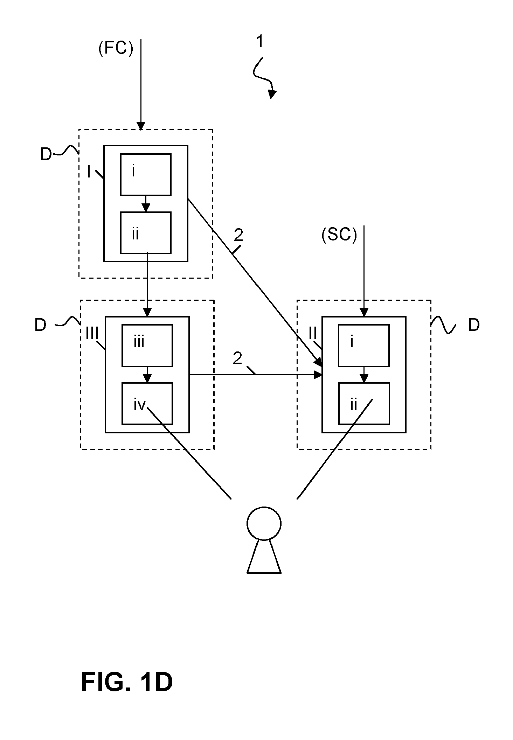

FIG. 1D is a schematic illustration of a system 1 wherein the content providing branch for the first content FC contains two devices D with two different content providing modules I and III. In this case, both content providing modules I and III report synchronisation information to the device D containing the second content providing module II.

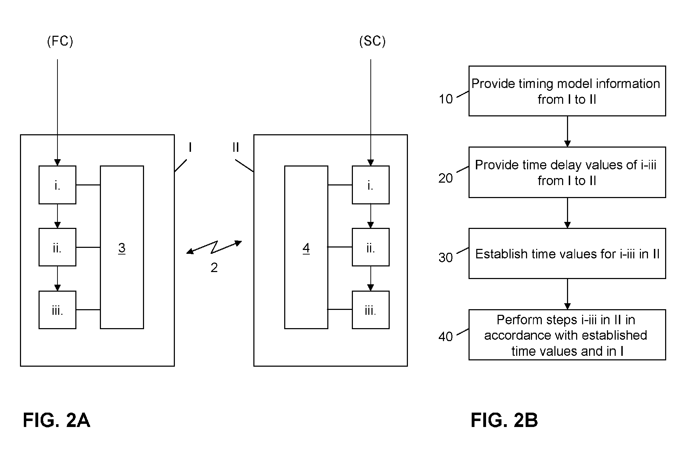

The system and method according to an embodiment of the invention will now be disclosed in further detail with reference to FIGS. 2A and 2B.

FIG. 2A depicts a first content providing module I and a second content providing module II configured to received first content (FC) and second content (SC) and to process the content in several content providing steps i, ii, iii. Information 2 is exchanged in order to synchronise content provisioning from the respective content providing modules I, II for the user U (not shown). The device(s) D wherein the content providing modules I, II are contained (see FIGS. 1A-1C) may perform further functions, e.g. receiving, demultiplexing, decoding etc. as steps prior to the content providing steps i-iii. It should be appreciated that the content providing steps i-iii are not necessarily identical or similar for both content providing modules I, II and that one or more steps in one content providing module I, II may or may not have corresponding steps in the other content providing module II, I. Content providing steps i-iii may e.g. relate to content processing, content rendering and content propagation. Whereas content processing makes use of a content processor and content rendering makes use of a content renderer, content propagation is not necessarily related to a module of the content providing module itself but may also relate to a particular medium outside the device D. Content propagation relates to the travelling of the rendered content fit for reception by the sensors of humans from the actuator to the human (e.g. the rumbles of an earthquake machine).

The content providing modules I, II have access to a processor 3, 4 that may run software configured for executing one or more steps of an embodiment of the invention as will now be explained in further detail with reference to FIG. 2B.

In a first step 10, content providing module 1 using processor 3 provides information indicative of one or more of the first content providing steps i-iii from the first content providing module I to a synchronisation module, here second content providing module II, via signal 2. In the same step or a next step 20, as indicated in FIG. 2B, information indicative of one or more time values associated with performing one or more of the first content providing steps i-iii are provided from the first content providing module to the second content providing module II via signal 2.

In a next step 30, the second content providing module II, using processor 4, establishes one or more time values for performing one or more of the second content providing steps i-iii in the second content providing module III in dependence on the received information indicative of the first content providing steps and the information indicative of the one or more time values associated with the first content providing steps i-iii.

Then, in step 40, the second content providing module I performs second content providing steps i-iii in accordance with the one or more established time values such that the second content SC is provided to the user U from the second content providing module II in synchronisation with the first content FC provided to the user U from the first content providing module I.

The system 1 at the site of the user U provides for a shared understanding between the first and second content providing module I, II on the applicable timing model by an explicit information exchange 2 of the content providing steps i-iii and of associated time values for one or more of these steps, thus adding unambiguous meaning to each of the content providing steps prior to presenting the first and second content to the user. The time delay information for specific content providing steps as received from the first content providing module I can be used by other modules II to determine when to provide content to the user U. The timing model for the first content providing module (e.g. an MPEG-2 timing model) is enriched with information enabling that timing information of the first content providing module can now be applied unambiguously by the second content providing module having a different timing model (e.g. an internet timing model).

One or more of steps 10-30 may be performed upon installing first and second content providing modules. This allows for pre-sharing information between the modules, e.g. during setup or booting the devices containing the module(s), since many time delay values remain substantially constant over time. For example, the rendering time of an STB or the processing time of a certain effect on a home surround sound set is almost constant. The pre-sharing of the information can e.g. be performed by broadcasting the information or by making the information available for interested modules on an synchronisation information interface.

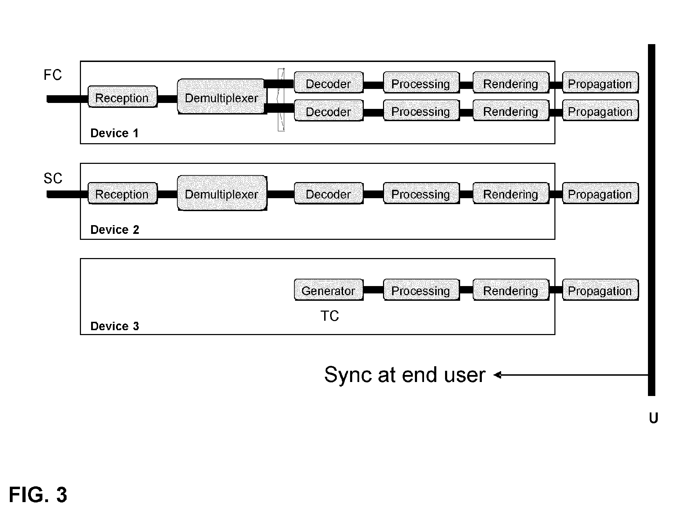

FIG. 3 is a schematic illustration of a system containing three devices performing content provident steps. The first device, e.g. an STB, receives first content FC via a transport stream containing two media (e.g. video and audio) streams that are separated by a demultiplexer and decoded by an appropriate decoder. The second device receives a single stream with second content SC and decodes the stream. The second device may e.g. be an audio device that receives a sound sample and calculates an effect specifically targeted for the room wherein it finds itself installed. The reception phase of the first and second device may include buffering in a buffer (not shown) and depacketizing delays by a depacketizer (not shown). The third device does not receive any content but generates third content TC itself and requiring only a time input for generating the third content TC in response to receiving e.g. an event and possibly the other content providing steps. Instead of a single presentation step for content providing, one or more of the devices have distinguishable content providing steps, such as processing, rendering and, where necessary, propagation as defined previously.

The devices in FIG. 3 communicate in order to synchronise content provision to the user U as described generally with reference to FIGS. 2A and 2B. In particular, the synchronisation information exchanged is enriched in order to be unambiguous for all devices. For example, the synchronisation information may include that the content processing step of device 1 takes 8 ms, the content rendering step provides for a delay of 2 ms, whereas the content propagation step amounts to 0 ms. As such, the second device becomes aware not only that the total delay for the first content FC is 10 ms without indicating a reference or meaning of that information, but is informed in detail on the individual delay for at least two content providing steps in the first device. Consequently, the second device (and also the third device) may adapt the content provision to the user U.

In addition, the first device may further provide interpretations of specific information. For example, the STB may announce that a presentation time stamp PTS is used to indicate the rendering moment.. The information is summarized in the table:

| *Message type* | *Message Domain* | *Interpretation* | *Interpreted by* |
|---|---|---|---|
| PTS | DVB/MPEG | Moment of rendering | STB |

This information provides further detail enabling better timing decisions further in the content providing chain. This is especially beneficial when ambiguous interpretations are possible.

Still further, the first device may provide further information on the reliability of the information provided from the first device. For example, the reliability (e.g. assumed, measured, guaranteed) may influence whether a receiving device is to automatically apply the further information, may correct the information or should give feedback to the first device when the information indicative of one or more of the first content providing steps and/or the information indicative of one or more time values associated with performing the first content providing steps is considered erroneous. The following table provides an example relating to annotations of a network delay time value:

| Message | Value | Interpretation | Interpreted by | Compensated for |
|---|---|---|---|---|
| Network delay | 5 ms | Assumed | STB | No |
| Network delay | 5 ms | Measured | STB | Yes |
| Network delay | 5 ms | Guaranteed | STB | Yes |

In each of the three rows, the STB informs other content providing modules that the network delay for receiving the first content FC amounts to 5 ms. In the first row, the STB informs the other devices that it only has assumed this value (low reliability) and that it did not take this value into account in the communicated time values for the first content providing steps. This information may trigger a receiving content providing module to determine the network delay itself and take the determined value into account for the content providing to the user from the second device. In the second row, the reliability of the network delay is improved since an actual measurement has occurred and, therefore, the first device accounted for the network delay in the time values transmitted to other content providing modules. Still, the second content providing module may, of course, perform a second measurement and rely on that value instead. In the third row, the network delay time value is guaranteed and the second content providing module may e.g. automatically apply the value received from the first device.

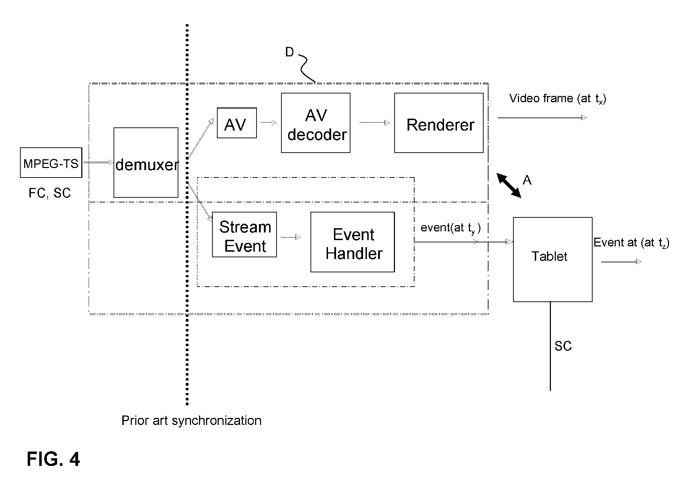

FIGS. 4-6 are schematic illustrations of an application of an embodiment of the invention using the DVB Event mechanism.

FIG. 4 shows a device D receiving an MPEG-TS containing first content FC having at least video/audio packets and stream event packets. The demuxer separates the video/audio packets and the stream event packets. The video/audio packets are decoded and further content providing steps are performed, such as the rendering of the content at a time tx. The stream event packets are processed by an event handler. The event handler processes the stream event packets and triggers a second device, e.g. a tablet computer (Tablet), at time ty to provide second content to the user. The second content is provided to the user at time tz after the Tablet has performed one or more content providing steps. The Tablet may receive the second content either from the MPEG-TS or from a separate network, e.g. the internet, both options being shown in FIG. 4.

In the prior art, synchronisation between the audio/video first content and the second content is only maintained up to the separation of the video/audio packets and the stream event packets as indicated by the dotted line, e.g. by the PTS based control known from the MPEG standard. However, since the Tablet is a separate device, the manufacturer of device D cannot compensate for further content providing delay variations in e.g. the Tablet or even in stream event handling. Therefore, tx will generally be different from tz, i.e. content is not provided in sync to the user (tx may also be different from ty in case the manufacturer of device D cannot control, e.g. by introducing extra delays, the event handling). Anyway, the synchronisation for the user, if any, is implementation dependent.

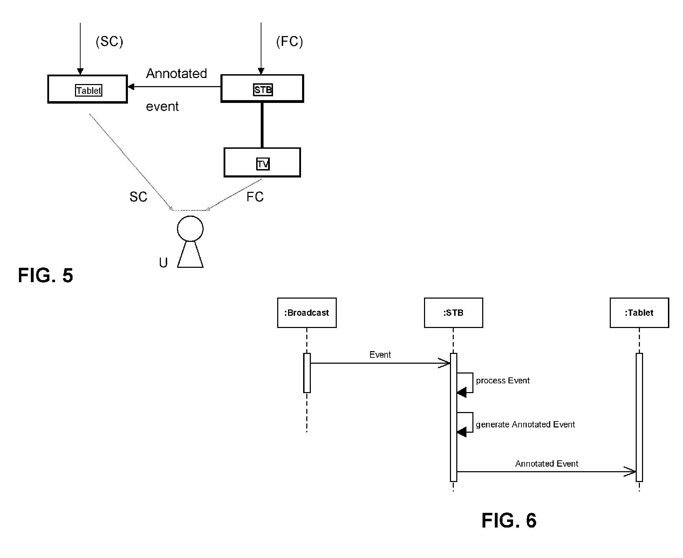

As mentioned above with reference to FIGS. 1A-1C, FIGS. 2A-2B and FIG. 3, the present disclosure enables true synchronisation of the first content and the second content for a user/viewer by enabling the devices to exchange information relating to content providing steps and time values associated with content providing steps. This is indicated in FIG. 4 by the arrow A. In this case, it is assumed that synchronisation is obtained between the AV content providing chain and the event handler, either by additional measures of the manufacturer of device D or by implying the present disclosure also between the event handler and the AV content providing chain in device D. It should be noted that information exchange may be one-way or two-way and may contain instructions, queries, negotiations etc between the devices or content providing modules. A detailed implementation will now be described with reference to FIGS. 5 and 6.

As depicted in FIGS. 5 and 6, an STB forwards Stream Event messages, embedded by the broadcaster of a TV broadcast, to a tablet device carrying an instruction to present additional content in sync with the TV broadcast received by the STB. The original DVB Stream Event messages are enhanced with semantics such that the MPEG-2 timing model can be applied to the tablet device, which has no notion of the MPEG-2 timing domain or the MPEG-2 reference decoder model.

In particular, a user/viewer first turns on the STB and starts watching a TV channel. This results in the reception of the respective broadcast. Upon reception, the event is extracted from the transport stream and processed. The event is sent then to the tablet that processes the event and, optionally, related content is retrieved. The TV channel is presented to the user and, simultaneously, the additional content is presented to the user from the tablet device, offering an enhanced user experience.

In more detail, upon reception of the event, the STB first stores the reception time of the event. The event is then processed. The system parses the event, and determines what the specified timing value should be representing. If the event does not contain an explicit time value (e.g. Do It Now), the system provides a time value itself and the interpretation of this time value. For example the time value may be related to the PTS of the packet containing the event; the STB records this system interpretation. As the event is destined for another device, this device must be notified of the time at which the corresponding data is presented by the STB, as this is more accurate then just giving the instruction "Do It Now" to the tablet. The STB then determines when the PTS of the corresponding audio and/or video frames are presented to the user. So the STB determines the actual processing delay (buffering, decoding, post-processing) and any other factors contributing to delay in presentation of the media. These values are stored in the event message:
- Decoding time (2 ms)
- Rendering time (10 ms)
- Processing time (500 ms)
- Processing time by additional devices in the delivery chain (0 ms)
- Propagation time (0 ms)

The STB calculates the remaining time between transmission of the event and the time result is presented to the user. Furthermore it also computes the remaining time between the expected arrival time of the event at the Tablet and the time at with the result must be presented to the user. This value is encompassed with the annotation that the network_delay is assumed and compensated for.

The below table shows a semantically enriched event message:

| | | |
|---|---|---|
| **Event-name** | "ShowImage" | |
| **Event-ID** | 2 | |
| **URI** | "http://www.domain.com/TVImage.png" | |
| **Event-timing-value** | 500 ms | |
| **Event-timing-value-type** | Relative | |
| **Event-timing-trigger-init** | Reception | |
| **Event-timing-result-type** | Present | |
| **Event-timing-result-component** | Processing | |
| **Event-timing-result-component-interface** | Output | |
| **Time-model-components** | Decoder, Rendering, Processing, Propagation, Network | |
| **Time-model-calculation-function** | (Decoder + Rendering + Processing + Propagation) - Network | |
| **Total** | **Value** | 500 ms |
| | **Interpretation** | Up on reception |
| | **Interpretation by** | STB (DVB) |
| | **Compensated for** | - |
| **Decoder** | **Value** | 2 ms |
| | **Interpretation** | Measured |
| | **Interpretation by** | STB (DVB) |
| | **Compensated for** | Yes |
| **Rendering** | **Value** | 10 ms |
| | **Interpretation** | Measured |
| | **Interpretation by** | STB (DVB) |
| | **Compensated for** | Yes |
| **Processing** | **Value** | 500 ms |
| | **Interpretation** | Measured |
| | **Interpretation by** | STB (DVB) |
| | **Compensated for** | Yes |
| **Propagation** | **Value** | 0 |
| | **Interpretation** | Assumed |
| | **Interpretation by** | STB |
| | **Compensated for** | Yes |
| **Network** | **Value** | 12 ms |
| | **Interpretation** | Assumed |
| | **Interpretation by** | STB (DVB) |
| | **Compensated for** | Yes |

The table shows a plurality of fields that will now be described in further detail. The "Event-timing-value" field provides a time value, according to a specified syntax. (Examples: Unix timestamp: 100232423, HH:MM:SS:sss). The "Event-timing-value-type" field provides the type of time value that is being reported. Time values types are "Relative", for a relative time value or "Absolute" for an absolute time value. An Absolute time value relates to an exact moment in time (e.g 3:00:00:000 GMT), a Relative time value only provides a time value related to a moment in time (e.g. 300 nanoseconds). The "Event-timing-trigger-init" field provides information about the trigger moment for a relative timing value, i.e. for a relative time value of 500 ms, the Event-timing-trigger-init value "Reception" means that the event must be executed 500 ms upon reception. Alternatives include e.g. Decoded, Interpreted etc. The "Event-timing-result-type" provides what the result of execution of the event should represent. Examples include: "Present", "Decode", "Forward" etc. The "Event-timing-result-component" field describes the component to which the result of the timing-event relates. The "Event-timing-result-component-interface" field describes whether at what interface the result must be executed at the timing value. Examples include: Input: input of the component, Output: output of the component. The "Time-model-components" field provides all components that contribute to the introduced delay in the device in the selected time-model. The "Time-model-calculation-function" provides a function of the components provided in the "Time-model-components"-field which represents how the overall processing delay is computed.

The following fields are provided per content providing step: the Time Value, Interpretation of the Value, The identifier of the device that provided the interpretation and whether the delay has been compensated for. Additionally the overall delay is provided by the "Total" field.

The STB may transmit a subset of this information to the tablet device. This information may contain all information that has meaning for the tablet device to get to a unambiguous interpretation of the event. The tablet needs e.g. the Event-type (*Present* image "http://www.domain.com/TVImage.png"), the Event-timing type and value (*relative, 500 ms*), a reference to a moment in time to what the remaining time correlates (upon *reception*), what is meant with the Event-Type-Action (It relates to the *Output* of the *Processing* step of the timing-model) and the fact that the STB has assumed a network transmission delay of 12 ms for the transmission of the event, and that it is incorporated in the timing model. This information is given in the following table:

| | | |
|---|---|---|
| **Event-name** | | "ShowImage" |
| **Event-ID** | | 2 |
| **URI** | | "http://www.domain.com/TVImage.png" |
| **Event-timing-value** | | 500 ms |
| **Event-timing-value-type** | | Relative |
| **Event-timing-trigger-init** | | Reception |
| **Event-timing-result-type** | | Present |
| **Event-timing-result-component** | | Processing |
| **Event-timing-result-component-interface** | | output |
| **Time-model-components** | | Decoder, Rendering, Processing, Propagation, Network |
| **Time-model-calculation-function** | | (Decoder + Rendering + Processing + Propagation) - Network |
| **Moment** | **Value** | 500 ms |
| | **Interpretation** | Up on reception |
| | **Interpretation by** | STB (DVB) |
| | **Compensated for** | - |
| **Network** | **Value** | 12 ms |
| | **Interpretation** | Assumed |
| | **Interpretation by** | STB (DVB) |
| | **Compensated for** | Yes |

Upon reception of the event, the tablet device may perform the following steps. The tablet device records the reception time of the event and determines whether the event message contains an absolute or relative time value. The tablet device further determines whether the event message contains any assumptions made by the STB that are invalid or can be corrected by the tablet device. The tablet device determines which content providing steps must be performed by the tablet device. It also determines what content providing steps need to occur at what specific time to provide the desired result at the moment as described in the event. The tablet device then starts a scheduler to present the desired result at the moment specified in the event.

For example, the tablet device receives the enhanced or annotated Event message as depicted in FIG. 6, notices the reception time and determines that the expected transmission(e.g. via encrypted WLAN connection) delay does not incorporate the process delay of the message before it is read from the socket, so it subtracts an additional 10 ms from the remaining time 500-10= 490. The tablet device then sets a countdown timer for 490 milliseconds and starts preloading the content described in the event message. When the timer reaches 0, the media is presented, in sync with the video displayed by the set top box.

While it is possible to enhance every event that is sent between the different devices or content providing modules that participate in creating an enhanced user experience, this may be inefficient in particular cases. Many parameters may be substantially constant over time and may be considered parameters of a certain setup. For example, the rendering time of an STB is dependent of its make and firmware version, as is the processing time of a home surround sound set when providing a certain effect. The problem of spuriously sending the same information can be solved by a simple broadcast mechanism. As soon as a device notifies its existence, e.g. on the home network, it exposes its parameters. This exposing can either be done by transmitting them or by providing an interface where other interested devices can get them.

When - in addition - providing a unique identifier belonging to a certain set of parameters, other devices or content providing modules are enabled to utilise their resources efficiently. For example, by caching parameter sets, repetitive queries for those parameter values can be skipped, thereby reducing network load. Each device describes which components it has (with reference to the timing model), e.g. "Decode, Render, Propagate" with its corresponding delays "10ms, 20ms, Oms". In addition, dependencies can be made explicit by defining "depends on = TV", enabling devices to expose complex setups.

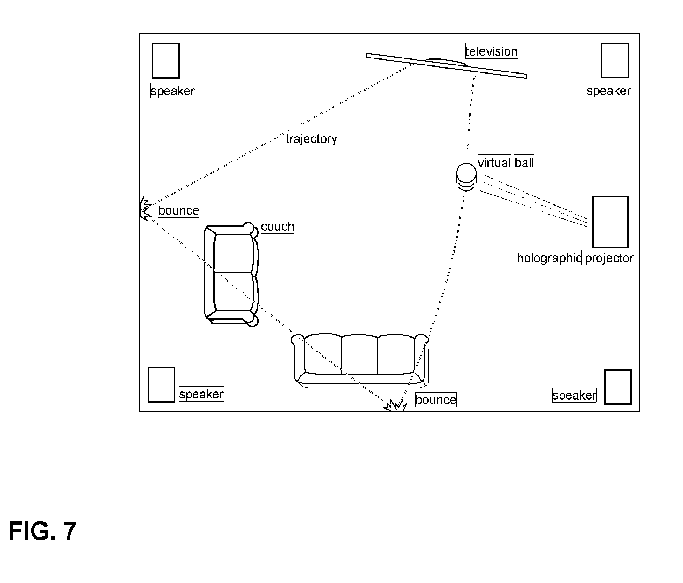

FIG. 7 is a schematic illustration of another embodiment of the invention. The system include a television, a surround sound speaker set and an holographic projector to provide a synchronised user experience for people sitting on a couch. The case will be described wherein a ball virtually "enters" the living room from a television screen, bounces on the walls and virtually "returns" into the television. In this case the ball is displayed on the television screen, and the rendering of the ball in the living room is provided by the holographic projector. The surround set generates the audible effects of the wall bouncing off the walls.

In more detail, a ball is visible on the television, travelling with high speed towards the user. When it reaches the 'end of the screen' the television stops displaying it. At that exact moment, the (holographic) projector has warmed up and projects a ball in front of the television, on the first spot of the (3 dimensional) trajectory indicated by the dashed line. The holographic projector moves the projection of the ball over the trajectory. At the point where the ball virtually bounces off the wall, the sound of a bouncing ball is heard in the living room, coming from the correct direction as produced by the speakers of the surround sound system. Then, the ball travels on via the trajectory, and performs a second bounce again changing direction accompanied by a bouncing sound.

The actions of the devices should be tightly synchronised to let the human observer experience the sensation of the ball in the room.

For the purpose of synchronising the devices, use is again made of the timing model information exchanged to determine when each device should present the result. In other words, the television announces the event to the devices (speaker system, holographic projector) and determines at what time the event must be provided. The holographic projector receives the event, interprets the situation and reports back that, considering the timing model the projector has e.g. three possible settings. For example, a low quality effect can be obtained, with a processing time of 100 milliseconds, a medium quality effect, which has a processing time of 200 milliseconds or a high quality effect, with a processing time of 300 milliseconds. The television determines - based on the timing model established - what experience can be created based on the available (remaining) time.

In addition, the devices involved have an understanding of the location of the observers and the physical dimensions of the room. Hence, the content providing step referred to as "propagation" now has additional meaning in the sense that is includes a location. Also, it has become a quickly changing parameter. Discovery of participants is considered part of the state-of-the-art and is not addressed further here.

The model includes a coordinate system plus a path/timing notation where applicable. In other words, the event message may now be additionally enhanced with position definition information, e.g. as displayed in the below table.

| | | |
|---|---|---|
| **Position** | **Value** | -2mtr, +3mtr, +0,5mtr |
| | **Model** | DVB-Exact |
| | **Interpretation** | Calculated |
| | **Interpretation by** | STB (DVB) |
| | **Compensated for** | Yes |

In the message, the audible effect must be generated as to originate from the point in the living room that is 2 meters from the left and 3 meters into the room at half a meter above the middle of the TV screen. This position reference is indicated by the feigned model field "DVB-Exact". Many co-ordinate systems have been envisaged, including less 'exact' ones; it would be useful to just state 'middle left wall'. As long as the model is agreed upon - and hence, understood by all devices - it will work. Different position models may be used for different content providing modules.

As mentioned above, a path definition can be part of the timing negotiations as well. In the simplest case, a point in space is made to correspond with a certain moment in time. Many of these in sequence define a trajectory. This can be made more efficient by defining two point/time pairs and interpolating between them. As an alternative, one could use a spline or curve of some sort to achieve more complex routes.

As a special case, a trajectory can be defined by regarding it as a travelling clock. The (from DVB) well known PTS (Presentation Time Stamp) may be extended to include position as well, e.g. PTSext = 21431515, PTS coord=x,y,z.

A possible embodiment may include one or more of the following steps. A generic presentation timestamp and a spatial timestamp may be mapped onto a timestamp plus a coordinate in a 3-dimensional space, as interpreted by the television. The new presentation timestamp and the coordinate may be shared with all involved devices. It is determined at what time each device must process/render/display the result) and the rendering of the result at the defined location by each of the devices at the provided time is then obtained. An example of an event description is provided in the below table, wherein a path in a 3-dimensional space at a specific time defined.

| Event Description | Time | Interpreted by: | Location (x,y,z), | Defined by: |
|---|---|---|---|---|
| Ball | 2134235115 | TV | 1, 4, 46 | TV |
| Ball | 2134235116 | TV | 1,4,50 | TV |
| Ball | 2134235117 | TV | 1, 4, 12 | TV |

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

## Claims

1. A method for providing a synchronised user experience comprising at least first content and second content, the first content being provided from a first content providing module at the site of the user and the second content being provided from a second content providing module at the site of the user, wherein the first content providing module receives or generates the first content and performs one or more first content providing steps to provide the first content to the user and the second content module receives or generates the second content and performs one or more second content providing steps to provide the second content to the user, the method comprising the steps of:
- providing information indicative of one or more of the first content providing steps from the first content providing module to a synchronisation module;
- providing information indicative of one or more time values associated with performing one or more of the first content providing steps from the first content providing module to the synchronisation module;
- establishing, in the synchronisation module, one or more time values for performing one or more of the second content providing steps in the second content providing module in dependence on the received information indicative of the first content providing steps and the information indicative of the one or more time values associated with the first content providing steps;
- performing, in the second content providing module, one or more of the second content providing steps in accordance with the one or more established time values from the synchronisation module such that the second content is provided to the user from the second content providing module in synchronisation with the first content provided to the user from the first content providing module.

2. The method according to claim 1, wherein the first and second content providing steps include at least a content processing step for processing the received first and second content and a content rendering step for rendering the processed first and second content.

3. The method according to claim 1 or 2, wherein the first content providing step and the second content providing step include a content propagation step for presenting the rendered first and second content at the user.

4. The method according to one or more of the preceding claims, wherein further the identity of the first content providing module providing the time values associated with the first content providing steps is communicated to the synchronisation module.

5. The method according to one or more of the preceding claims, wherein further information is provided to the synchronisation module, the further information containing at least one of the reliability of one or more of the time values associated with the one or more first content providing steps and an indication whether the time required for a first content providing step has been taken into account in the time value provided to the synchronisation module.

6. The method according to one or more of the preceding claims, wherein, prior to receiving or generating the first content at the first content providing module, at least one of the step of providing information indicative of one or more of the first content providing steps and the step of providing information indicative of one or more time values associated with performing one or more of the first content providing steps is provided from the first content providing module to the synchronisation module.

7. The method according to one or more of the preceding claims, wherein the first content providing module further provides location information to the synchronisation module, the location information including location reference information and location values in accordance with the location reference information for indicating the location for providing the second content.

8. The method according to one or more of the preceding claims, further comprising the steps of:
- reporting options for providing the second content from the second content providing module to the first content providing device or negotiating the options between the first and second content providing module, each of the options being associated with one or more different time values for one or more second content providing steps for providing the second content;
- selecting an option in the first content providing module on the basis of the reported different time values and the available time for presenting the first content from the first content providing module;
- instructing the second content providing module which option to use to provide the second content to the user.

9. The method according to one or more of the preceding claims, wherein the synchronisation module is the second content providing module or is provided in the same device as the second content providing module.

10. A system for providing a synchronised user experience comprising at least first content and second content, the system comprising:
- a first content providing module at the site of the user configured for receiving or generating the first content and for performing one or more first content providing steps to provide the first content to the user;
- a second content providing module at the site of the user configured for receiving or generating the second content and for performing one or more second content providing steps to provide the second content to the user;
- wherein the first content providing module is further configured to provide information indicative of one or more of the first content providing steps and to provide information indicative of one or more time values associated with performing one or more of the first content providing steps to a synchronising module;
- wherein the synchronising module is further configured to establish one or more time values for performing one or more of the second content providing steps in dependence on the received information indicative of the first content providing steps and the information indicative of the one or more time values associated with the first content providing steps from the first content providing device; and
- wherein the second content providing module is configured to perform the second content providing steps in accordance with one or more of the established time values such that the second content is provided to the user from the second content providing module in synchronisation with the first content provided to the user from the first content providing module.

11. The system according to claim 10, wherein the synchronising module is provided in the same device as the second content providing module.

12. The system according to claim 10 or 11 configured for performing the method according to one or more of the claims 2-8.

13. A first content providing module for use in a system according to one or more of the claims 10-12, wherein the first content providing module is configured for:
- receiving or generating first content and for performing one or more first content providing steps to provide the first content to the user;
- providing information indicative of one or more of the first content providing steps; and
- providing information indicative of one or more time values associated with performing one or more of the first content providing steps to a second content providing module.

14. A second content providing module for use in a system according to one or more of the claims 10-12, wherein the second content providing module is configured for:
- receiving or generating second content and for performing one or more second content providing steps to provide the second content to the user;
- receiving information from a first content providing module indicative of one or more first content providing steps for providing the first content from the first content providing module;
- receiving information indicative of one or more time values associated with performing one or more of the first content providing steps; and
- establishing one or more time values for performing one or more of the second content providing steps in dependence on the received information indicative of the first content providing steps and the information indicative of the one or more time values associated with the first content providing steps from the first content providing device,
- performing one or more of the second content providing steps in accordance with the established time values to provide the second content to the user in synchronisation with the first content.

15. A synchronisation module for use in the system according to one or more of the claims 10-12, configured for:
- receiving information from a first content providing module indicative of one or more first content providing steps for providing the first content from the first content providing module;
- receiving information indicative of one or more time values associated with performing one or more of the first content providing steps;
- establishing one or more time values for performing one or more of the second content providing steps in dependence on the received information indicative of the first content providing steps and the information indicative of the one or more time values associated with the first content providing steps from the first content providing device; and
- providing one or more of the established time values for performing one or more of the second content providing steps to the second content providing module.

16. A synchronisation signal adapted to synchronise a second content providing module with a first content providing module, the synchronisation signal containing information indicative of one or more first content providing steps for providing first content from the first content providing module and information indicative of one or more time values associated with performing one or more of the first content providing steps.
